# EUROPEAN PATENT APPLICATION

(11) **EP 2 306 390 A1**
(43) Date of publication of application: **06.04.2011**
(21) Application number: 09757073.3
(22) Date of filing: 01.06.2009
(51) Int. Cl.: G06Q 30/00

(54) **PROCESSING METHOD, SYSTEM AND DEVICE FOR ADVERTISEMENT DISTRIBUTION**

(30) Priority: 03.06.2008 CN 200810110444
(71) Applicant: Huawei Technologies Co., Ltd., Longgang District, Shenzhen Guangdong 518129 (CN)
(72) Inventor: FU, Pei, Longgang District 518129, Shenzhen (CN); SHAO, Gang, Longgang District 518129, Shenzhen (CN); TAN, Yinyan, Longgang District 518129, Shenzhen (CN); ZHAN, Jinjing, Longgang District 518129, Shenzhen (CN)
(74) Representative: Kreuz, Georg Maria
(86) International application number: PCT/CN2009/072068
(87) International publication number: WO 2009/146639

(57) **Abstract**

A method, a system, and a device for advertisement distribution are provided. The method includes the following steps: A main advertisement to be distributed and subsidiary advertisement(s) corresponding to the main advertisement are obtained according to advertisement metadata and a received advertisement request. The advertisement request is responded to by using the main advertisement and the subsidiary advertisement(s) as the whole content of the advertisement to be distributed. In the embodiments of the present invention, personalized advertisement contents are provided for users, so that user experience and advertisement effect are improved. A terminal requests only a server for subsidiary advertisement(s) according to a cached main advertisement, so that the utilization ratio of the cached advertisement is increased, and network traffic is reduced.

## Description

This application claims priority to Chinese Patent Application No. 200810110444.5, filed with the Chinese Patent Office on June 3, 2008 and entitled "PROCESSING METHOD, SYSTEM, AND DEVICE FOR ADVERTISEMENT DISTRIBUTION", which is incorporated herein by reference in its entirety.

### FIELD OF THE TECHNOLOGY

The present invention relates to the field of communication technology, and more particularly to a processing method, a system, and a device for advertisement distribution.

### BACKGROUND OF THE INVENTION

Mobile advertisement provides a user with personalized advertisements according to user data, such as a user profile and user context, obtained from a mobile network or terminal. The user profile includes personal data and user preferences. The personal data includes the age, gender, occupation, and age of a user. The user preference includes advertisement preferences. The user context includes user's location information, presence information, and a device profile. The presence information includes a state, communication information, and other relevant information.

In the prior art, the architecture of mobile advertisement system mainly includes an advertisement server and an advertisement client. The advertisement server is connected to an external capability entity of an advertisement system and a service provider service entity. The advertisement client is connected to an external capability entity of an advertisement system and a terminal application entity. The advertisement server selects an advertisement according to a request from the advertisement client and an advertisement distribution plan made by an advertiser, and sends a response to the advertisement client. The advertisement client responds to a request from an advertisement bearer service, selects an advertisement from a terminal cache or requests the advertisement server for advertisements, and responds. The advertisement server or the terminal selects a suitable advertisement for a user according to the advertisement request and advertisement metadata.

However, in the prior art, personalized advertisements are provided for users according to user data, and when the same advertisement is provided for different users, the advertisement effects to the users are the same, and the effect of determining actual personalized advertisements according to the user data is not achieved.

### SUMMARY OF THE INVENTION

The present invention provides a processing method, a system, and a device for advertisement distribution, so that personalized advertisement contents are determined according to user data.

According to the first aspect of the present invention a processing method for advertisement distribution includes:
obtaining a main advertisement to be distributed and subsidiary advertisement(s) corresponding to the main advertisement according to advertisement metadata and a received advertisement request; and
responding to the advertisement request by using the main advertisement and the subsidiary advertisement(s) as the whole content of an advertisement to be distributed.

An embodiment of the present invention provides a method for advertisement distribution, where the method includes:
obtaining an advertisement to be distributed and subsidiary advertisement(s) corresponding to the advertisement according to advertisement metadata and an advertisement request; and
distributing the subsidiary advertisement(s) as the whole content of an advertisement to be distributed.

An embodiment of the present invention provides a service entity, where the service entity includes:
an advertisement determination unit, configured to obtain a main advertisement to be distributed and subsidiary advertisement(s) corresponding to the main advertisement according to advertisement metadata and an advertisement request; and
an advertisement distribution unit, configured to distribute the advertisement using the main advertisement and the subsidiary advertisement(s) as the whole content.

According to the second aspect of the present invention an advertisement server includes:
an advertisement determination unit, configured to obtain a main advertisement to be distributed and subsidiary advertisement(s) corresponding to the main advertisement according to advertisement metadata and an advertisement request; and
an advertisement distribution unit, configured to distribute the advertisement using the main advertisement and the subsidiary advertisement as the whole content.

An embodiment of the present invention provides an advertisement distribution system, which includes an advertisement client, or a Service Provider (SP) service entity, or an advertisement server.

According to the third aspect of the present invention a service entity includes:
an advertisement determination unit, configured to obtain a main advertisement to be distributed and subsidiary advertisement(s) corresponding to the main advertisement according to advertisement metadata and an advertisement request; and
an advertisement distribution unit, configured to distribute the advertisement using the subsidiary advertisement(s) as the whole content.

An embodiment of the present invention provides an advertisement server, where the advertisement server includes:
an advertisement determination unit, configured to obtain a main advertisement to be distributed and subsidiary advertisement(s) corresponding to the main advertisement according to advertisement metadata and an advertisement request; and
an advertisement distribution unit, configured to distribute the advertisement using the subsidiary advertisement(s) as the whole content.

An embodiment of the present invention provides an advertisement distribution system, which includes an advertisement client, or an SP Application, or an advertisement server.

In the present invention, personalized advertisement contents are provided for users, so that user experience and advertisement effect are improved. A terminal only requests a server for subsidiary advertisement(s) according to a cached main advertisement, so that the utilization ratio of cached advertisements is increased, and network traffic is reduced.

### BRIEF DESCRIPTION OF THE DRAWINGS

FIG. 1 is a flow chart of a method for advertisement distribution according to an embodiment of the present invention;
FIG. 2 is a flow chart of another method for advertisement distribution according to an embodiment of the present invention;
FIG. 3 is a schematic diagram of a subsidiary advertisement description method according to an embodiment of the present invention;
FIG. 4 is a schematic flow chart of terminal side personalized advertisement selection according to an embodiment of the present invention;
FIG. 5 is a flow chart of a terminal side personalized advertisement selection method corresponding to subsidiary advertisement(s) description method according to an embodiment of the present invention;
FIG. 6 is a timing sequence diagram of FIG. 5 according to an embodiment of the present invention;
FIG. 7 is a schematic diagram of an advertisement including multiple mutually independent subsidiary advertisements according to an embodiment of the present invention;
FIG. 8 is a flow chart of a terminal side personalized advertisement selection method corresponding to a subsidiary advertisement(s) description method according to an embodiment of the present invention;
FIG. 9 is a structural view of a service entity according to an embodiment of the present invention;
FIG. 10 is a structural view of an advertisement server according to an embodiment of the present invention;
FIG. 11 is a structural view of a service entity according to an embodiment of the present invention; and
FIG. 12 is a structural view of an advertisement server according to an embodiment of the present invention.

### DETAILED DESCRIPTION OF THE EMBODIMENTS

In an embodiment, the present invention provides a processing method for determining advertisement contents according to user data, and the basic steps include: determining an advertisement to be distributed (selecting an advertisement) and determining contents of the advertisement (selecting the contents). For advertisement, two advertisement content description methods and determination methods exist in an advertisement system.

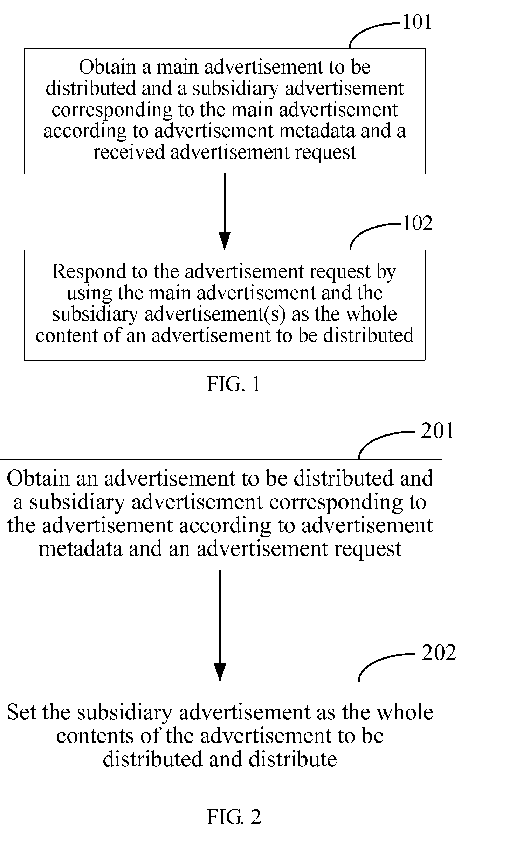

In an embodiment, the present invention provides a processing method for advertisement distribution. The method, as shown in FIG. 1, includes the following steps:

In step 101, a main advertisement to be distributed and subsidiary advertisement(s) corresponding to the main advertisement are obtained according to advertisement metadata and a received advertisement request.

The obtaining of the main advertisement to be distributed and the subsidiary advertisement(s) corresponding to the main advertisement according to the advertisement metadata and the received advertisement request includes the following steps: The main advertisement to be distributed is determined according to pre-stored advertisement metadata and the received advertisement request. The subsidiary advertisement(s) to be distributed are determined according to a pre-stored subsidiary advertisement distribution condition of the main advertisement. The determining of the subsidiary advertisement(s) to be distributed according to the pre-stored subsidiary advertisement distribution condition of the main advertisement includes the following steps: Distribution context data required for judgment is obtained according to the pre-stored subsidiary advertisement distribution condition of the main advertisement. The subsidiary advertisement(s) meeting the distribution condition is determined as the subsidiary advertisement to be distributed according to the obtained distribution context data. The obtaining of the distribution context data required for judgment according to the pre-stored subsidiary advertisement distribution condition of the main advertisement includes the following steps: A data source address of the distribution context data and a request method are determined. The corresponding context data is requested from the data source address, and a response is received.

In step 102, the advertisement request is responded to by using the main advertisement and the subsidiary advertisement(s) as the whole content of the advertisement to be distributed. When the entity which responds to the advertisement request is an advertisement client or an SP Application, the obtaining of the main advertisement to be distributed and the subsidiary advertisement(s) corresponding to the main advertisement according to the advertisement metadata and the advertisement request includes the following steps: The advertisement client or the SP Application judges whether the local storage of the client or the SP Application stores contents of the main advertisement meeting the distribution condition according to the advertisement metadata and the received advertisement request. If the local storage of the client or the SP Application has the main advertisement meeting the condition, the advertisement is determined as the main advertisement to be distributed, and in addition, whether the local storage of the client or the SP Application has subsidiary advertisement(s) of the main advertisement meeting the distribution condition is judged according to the subsidiary advertisement distribution condition of the main advertisement. If subsidiary advertisement(s) meeting the distribution condition exist, the subsidiary advertisement(s) are determined as the subsidiary advertisement(s) to be distributed. If subsidiary advertisement(s) meeting the distribution condition does not exist, subsidiary advertisement(s) of the main advertisement meeting the distribution condition are obtained from an advertisement server. If the local storage of the client or the SP Application does not have the main advertisement meeting the condition, the advertisement server is requested for the main advertisement meeting the condition and the subsidiary advertisement corresponding to the main advertisement.

The judging of whether the local storage of the client or the SP Application has the subsidiary advertisement of the main advertisement meeting the distribution condition according to the subsidiary advertisement distribution condition of the main advertisement includes the following steps: The advertisement client or the SP Application obtains the distribution context data needed for judgment according to the subsidiary advertisement distribution condition of the main advertisement. The advertisement client or the SP Application determines the subsidiary advertisement meeting the distribution condition as the subsidiary advertisement to be distributed according to the obtained distribution context data.

The obtaining, by the advertisement client or the SP Application, the distribution context data needed for judgment according to the subsidiary advertisement distribution condition of the main advertisement includes the following steps: The advertisement client or the SP Application determines the data source address of the distribution context data and the request method. The advertisement client or the SP Application requests for the corresponding context data from the data source address, and receives the response.

The requesting, by the advertisement client or the SP Application, the advertisement server for the main advertisement meeting the distribution condition and the subsidiary advertisement corresponding to the main advertisement includes the following step: The advertisement client or the SP Application sends a request for main advertisement to the advertisement server.

The requesting, by the advertisement client or the SP Application, the advertisement server for the subsidiary advertisement of the main advertisement meeting the distribution condition includes the following step: The advertisement client sends a subsidiary-advertisement request to the server. The subsidiary-advertisement request carries an identifier (ID) of the requested main advertisement and an ID of the subsidiary advertisement, or the subsidiary-advertisement request carries an ID of the requested main advertisement.

The subsidiary-advertisement request further includes an ID of an already stored subsidiary advertisement, which indicates whether the advertisement client stores a default subsidiary advertisement. When the server selects the default subsidiary advertisement as the subsidiary advertisement to be distributed, and the advertisement client stores the default subsidiary advertisement, the subsidiary advertisement returned to the advertisement client is the ID of the default subsidiary advertisement, and does not include content of the subsidiary advertisement.

The responding to the advertisement request by using the main advertisement and the subsidiary advertisement(s) as the whole content of the advertisement to be distributed includes the following steps: The main advertisement and the subsidiary advertisement(s) are merged, and the merged advertisement content is set in the response to the advertisement request. Or, a response message to the advertisement request is obviously divided into main-advertisement contents and subsidiary-advertisement contents.

In an embodiment, the present invention provides a processing method for advertisement distribution, which, as shown in FIG. 2, includes the following steps:

In step 201, obtain a main advertisement to be distributed and subsidiary advertisement(s) corresponding to the main advertisement according to advertisement metadata and an advertisement request. The obtaining of the main advertisement to be distributed and the subsidiary advertisement(s) corresponding to the main advertisement according to the advertisement metadata and the advertisement request includes the following steps: The advertisement to be distributed is determined according to the pre-stored advertisement metadata and user data. The subsidiary advertisement(s) to be sent to a user is determined according to a distribution condition corresponding to the subsidiary advertisements of the determined advertisement and distribution context.

The determining of the subsidiary advertisement to be distributed according to the pre-stored subsidiary advertisement distribution condition of the main advertisement includes the following steps: Distribution context data needed for judgment is obtained according to the subsidiary advertisement distribution condition of the advertisement. The subsidiary advertisement meeting the distribution condition is determined as the subsidiary advertisement to be distributed according to the obtained distribution context data.

The obtaining of the distribution context data needed for judgment according to the subsidiary advertisement distribution condition of the main advertisement includes the following steps: A data source address of the distribution context data and a request method are determined. The data source address is requested for the corresponding context data, and a response is received. When the entity responding to the advertisement request is an advertisement client or an SP Application, the obtaining of the advertisement to be distributed and the subsidiary advertisement(s) corresponding to the main advertisement according to the advertisement metadata and the advertisement request includes the following steps: The advertisement client or the SP Application receives the advertisement request, and selects an advertisement in a cache according to the request. If a suitable cached advertisement matches, the corresponding subsidiary advertisement is determined according to the advertisement. If no corresponding subsidiary advertisement is found, the subsidiary advertisement is obtained from an advertisement server. If no suitable cached advertisement matches, the advertisement and the corresponding subsidiary advertisement(s) are obtained from the advertisement server.

The obtaining of the subsidiary advertisement(s) from the advertisement server includes the following steps: The advertisement client or the SP Application sends a subsidiary-advertisement request to the advertisement server. The subsidiary-advertisement request carries an ID of the advertisement and an ID of the subsidiary-advertisement request. The advertisement server selects suitable subsidiary advertisement(s), and sends the subsidiary advertisement(s) and the distribution condition corresponding to the subsidiary advertisement(s) to the advertisement client or the SP Application.

The obtaining of the advertisement and the corresponding subsidiary advertisement(s) from the advertisement server includes the following steps: The advertisement client or the SP Application sends the advertisement request to the advertisement server. The advertisement server selects the advertisement and the suitable subsidiary advertisement(s), and sends the advertisement and the suitable subsidiary advertisement(s) to the advertisement client or the SP Application.

The determining of the corresponding subsidiary advertisement according to the advertisement includes the following step. The subsidiary advertisement distribution condition is matched according to the distribution context, and the subsidiary advertisement(s) meeting the condition are selected.

In step 202, set the subsidiary advertisement(s) as the whole content of the advertisement to be distributed and distribute.

Specific implementation of the present invention is described in further details below with reference to the accompanying drawings and embodiments.

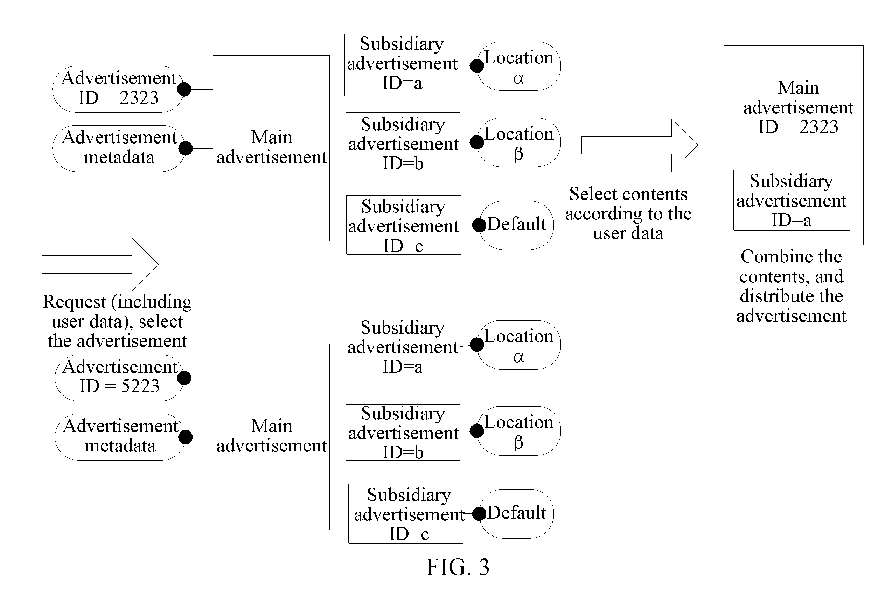

FIG. 3 is a schematic diagram of a subsidiary advertisement description method. An advertisement includes a main advertisement and multiple subsidiary advertisements. The main advertisement corresponds to a piece of advertisement metadata and a main advertisement ID. A subsidiary advertisement includes a subsidiary advertisement ID, a part of content of the advertisement, and a corresponding distribution condition. The distribution condition indicates that when distribution context of a requested advertisement meets the distribution condition, a subsidiary advertisement corresponding to the distribution condition is selected as a part of an advertisement to be sent to a user. For example, the distribution condition may indicate "a user located in the area A", "a user being female", "the age of a user being over 20 and less than 30", or logical computation of the above conditions, such as "a user located in the area A, and the device language being English". A main advertisement may include a default subsidiary advertisement. If no other subsidiary advertisements match, the default subsidiary advertisement is selected as a part of an advertisement to be sent to a user.

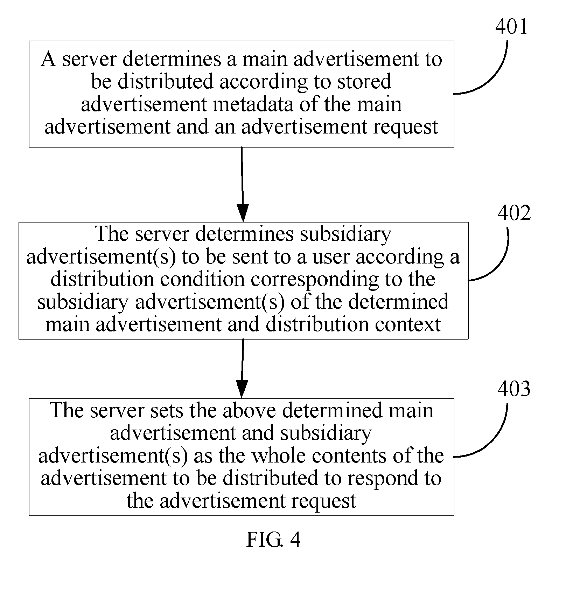

FIG. 4 is a flow chart of a server-side personalized advertisement selection method corresponding to a subsidiary advertisement description method in an embodiment of the present invention, which includes the following steps:

In step 401, a server determines a main advertisement to be distributed according to stored advertisement metadata of the main advertisement and an advertisement request, and the main advertisement may be distributed to an advertisement client or a service provider.

In step 402, the server determines a subsidiary advertisement to be sent to a user according to a distribution condition corresponding to the subsidiary advertisement of the determined main advertisement and distribution context. The method for determining the subsidiary advertisement includes the following steps:
1. The advertisement metadata corresponding to each main advertisement includes subsidiary advertisement distribution condition metadata. For example, a distribution condition of a subsidiary advertisement includes the location, gender, and age of a user, and the distribution conditions are represented in the advertisement metadata.
   For example, distribution condition metadata may be represented as:

   ```
         <AD_metadata>
         ......
         <segment_condition_metadata>
         <user_profile_condition type = "Location"/>
         <user_profile_condition type = "Language"/>
         </media>
         ......
         </AD_metadata>
```

   The part of primitive indicates that the subsidiary advertisement distribution condition of the main advertisement includes the user location and the terminal device language.
2. After a main advertisement is determined as the advertisement to be distributed, corresponding distribution context data is obtained according to subsidiary advertisement distribution condition metadata included in the metadata of the main advertisement. For example, the distribution condition metadata in the above example includes the location and the terminal device language, so that the present location of the user and the language setting of the device being used are required to be obtained to match the distribution condition. The distribution context may come from an advertisement request, and may also come from advertisement system external capability, such as a location server complying with Open Mobile Alliance (OMA) specifications, a presence information server, and the distribution context may include user profile data, terminal device capability data, location information, and presence information. An external data source address is preset in the advertisement server, and when data is requested, a corresponding address is obtained first.
3. A distribution condition of a subsidiary advertisement is computed according to the above obtained distribution context, and a subsidiary advertisement meeting the condition is set as the subsidiary advertisement to be distributed.

In step 403, the server responds to the advertisement request by using the above determined main advertisement and subsidiary advertisement as the whole content of the advertisement to be distributed.

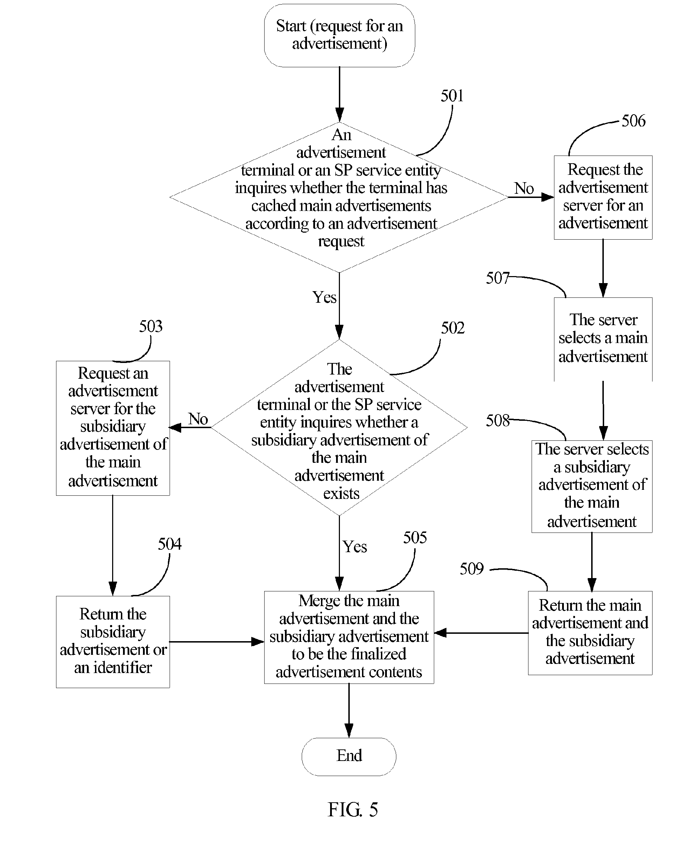

In an embodiment of the present invention, a flow chart of a terminal side personalized advertisement selection method corresponding to the subsidiary advertisement description method is shown in FIG. 5, which includes the following steps:

In step 501, an advertisement client or an SP Application queries main advertisement cached in the advertisement client according to an advertisement request. If a suitable main advertisement is found, the procedure proceeds to step 502; if a suitable main advertisement is not found, the procedure proceeds to step 506.

In step 502, a subsidiary advertisement already cached in the terminal corresponding to the main advertisement determined in step 501 is determined according to distribution context. If the subsidiary advertisement is found, the procedure proceeds to step 505; if the subsidiary advertisement is not found, the procedure proceeds to step 503. The method for determining the subsidiary advertisement is the same as the server-side subsidiary advertisement determination method.

In step 503, an advertisement server is requested for the subsidiary advertisement of the main advertisement. The request at least includes an ID of the main advertisement in step 501. The subsidiary-advertisement request may include user data obtained when the terminal determines the subsidiary advertisement, and then only the user data included in the request is required for the server-side determination of the subsidiary advertisement, and advertisement system external capability is not needed to be requested for the user data.

In step 504, the advertisement server sends the subsidiary advertisement to the advertisement client according to the subsidiary advertisement corresponding to the requested main advertisement, which at least includes the main advertisement ID, a subsidiary advertisement ID, the subsidiary advertisement, and a corresponding distribution condition.

In step 505, the advertisement client sets the main advertisement of the advertisement in step 501 and the subsidiary advertisement obtained in step 502 or step 504 as the finalized advertisement content and sends to the terminal.

In step 506, the advertisement client requests the advertisement server for an advertisement.

In step 507, the server selects a main advertisement.

In step 508, the server selects subsidiary advertisement(s) of the above main advertisement.

In step 509, the server sends the above main advertisement and subsidiary advertisement(s) to the advertisement client. The procedure proceeds to step 505.

Furthermore, a default subsidiary advertisement indicator may be included in step 503, which indicates whether the advertisement client stores a default subsidiary advertisement. When the server selects the default advertisement as the subsidiary advertisement to be distributed, and the advertisement client stores the default subsidiary advertisement, the subsidiary advertisement returned in step 504 is the ID of the default advertisement, and content of the subsidiary advertisement may not be included, so that the advertisement client obtains the subsidiary advertisement from the default subsidiary advertisement stored locally according to the ID of default advertisement.

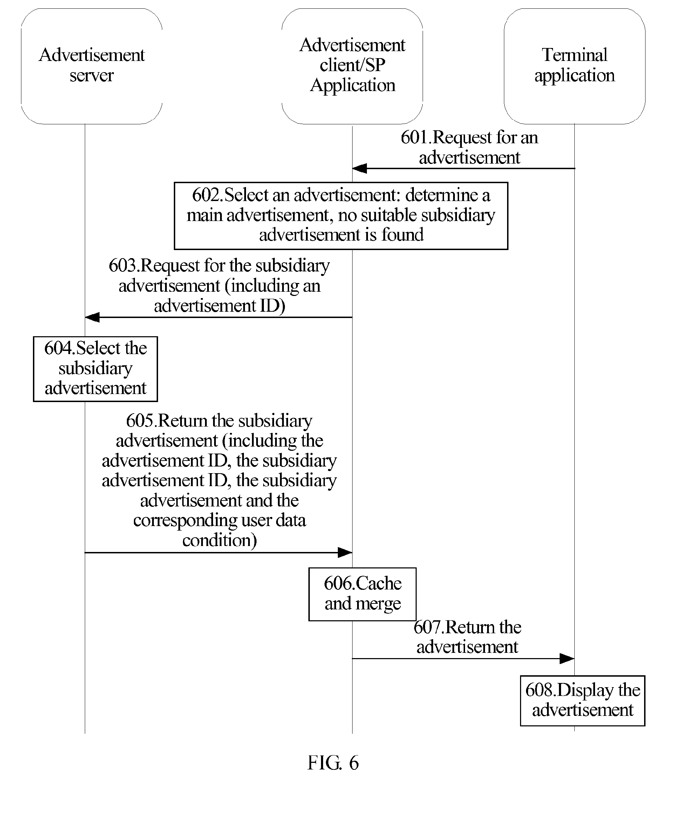

FIG. 6 is a timing sequence diagram of FIG. 5, which includes the following steps:

In step 601, a terminal application sends an advertisement request to an advertisement client.

In step 602, the advertisement client selects a main advertisement and subsidiary advertisement(s). If the main advertisement is determined, but no suitable subsidiary advertisement is found, the procedure proceeds to step 603.

In step 603, a subsidiary-advertisement request is sent to an advertisement server, which carries a main advertisement ID.

In step 604, the advertisement server selects subsidiary advertisement(s) corresponding to the main advertisement according to the main advertisement ID.

In step 605, the advertisement server returns the subsidiary advertisement to the advertisement client, which carries the main advertisement ID, subsidiary advertisement ID(s), the subsidiary advertisement(s), and a corresponding distribution condition.

In step 606, the advertisement client caches and merges the main advertisement and the subsidiary advertisement(s).

In step 607, the advertisement client returns the merged advertisement to the terminal application.

In step 608, the terminal application displays the advertisement.

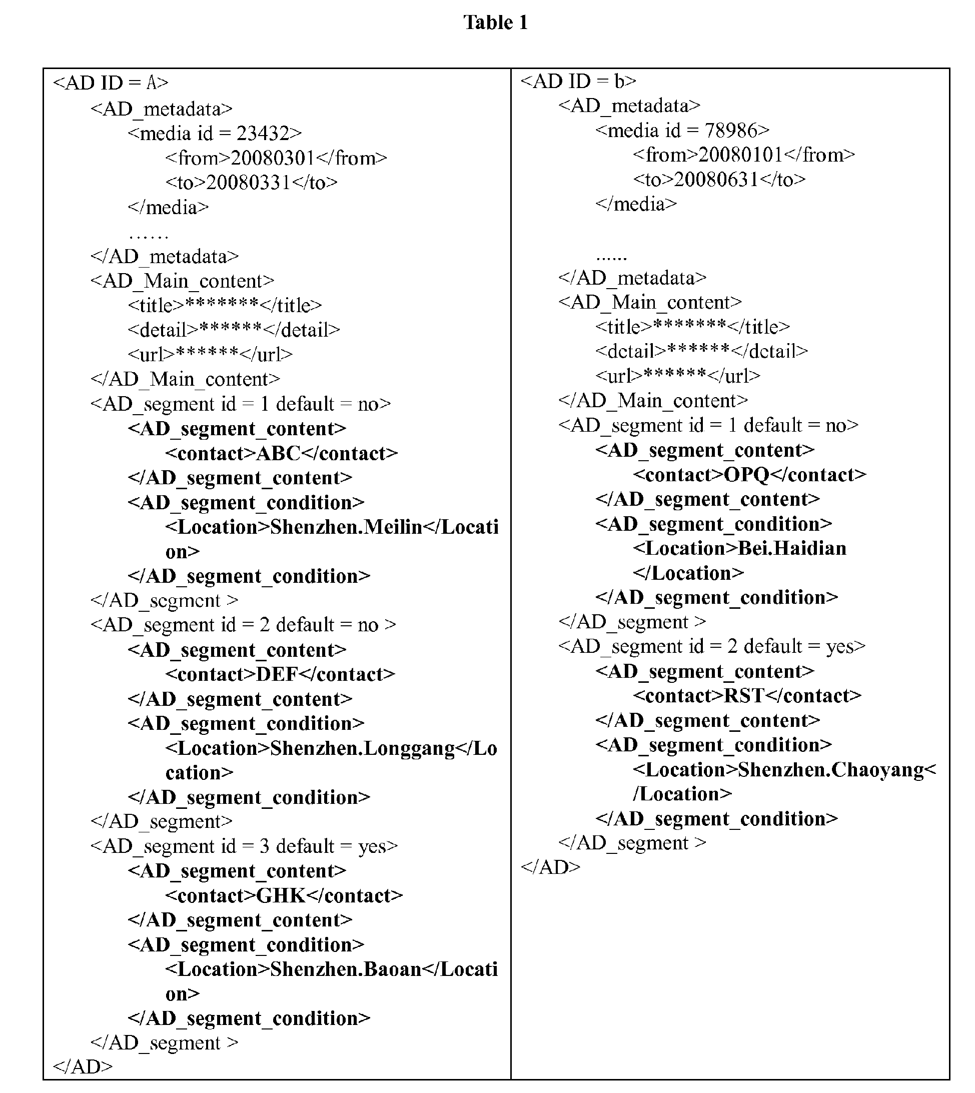

In an embodiment of the present invention, the distribution of a main advertisement and subsidiary advertisement(s) by an advertisement server is described in details as the following. The advertisement stored in the advertisement server is as shown in Table 1.
1. When a user browses a social networking site with a mobile terminal, and triggers an advertisement request, and the request includes a media ID number, which equals 23432.
2. The advertisement server matches each advertisement AD_metadata in Table 1 according to parameters in the request, and selects an advertisement A as a candidate advertisement according to the media ID of the media that the advertisement is to be distributed with.
3. The advertisement server requests an advertisement system external resource for the present location of the user (for details, refer to relevant OMA standards for details) according to information related to an AD_segment_condition of an AD_segment in the advertisement A, and selects contents of the AD_segment whose ID number equals 1 as the subsidiary advertisement according to the location.
4. The advertisement A, including an AD_Main_content (a main advertisement) and an AD_segment_content (the subsidiary advertisement(s)) whose ID number equals 1, is sent to the terminal, and the detailed contents are shown in Table 2. The main advertisement ID, the subsidiary advertisement ID, and a distribution condition corresponding to the subsidiary advertisement are also included.

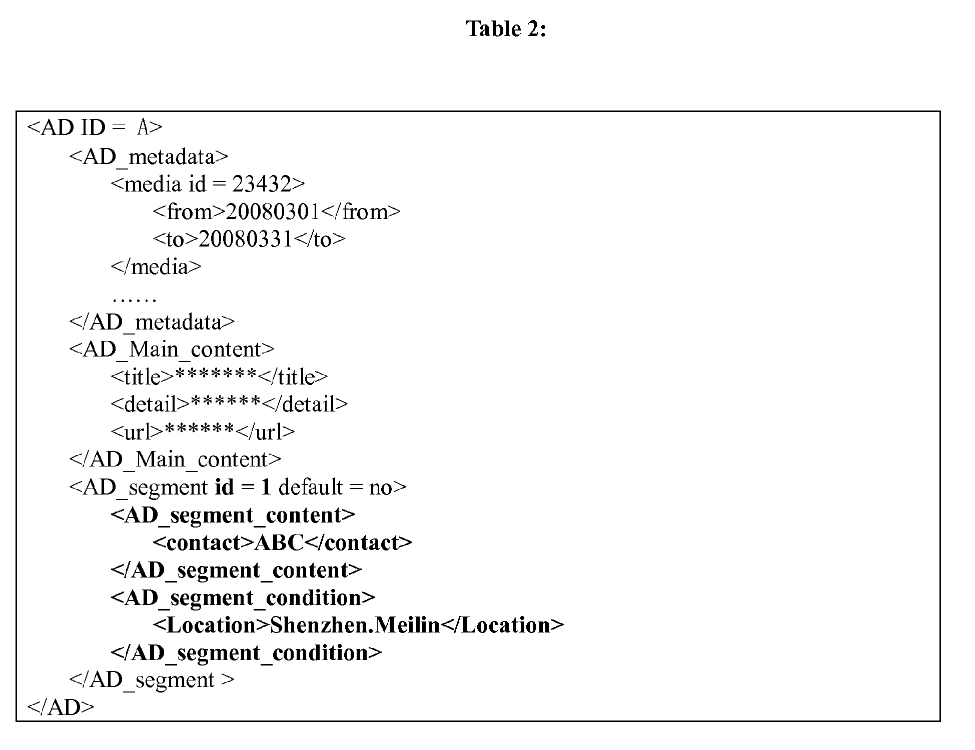

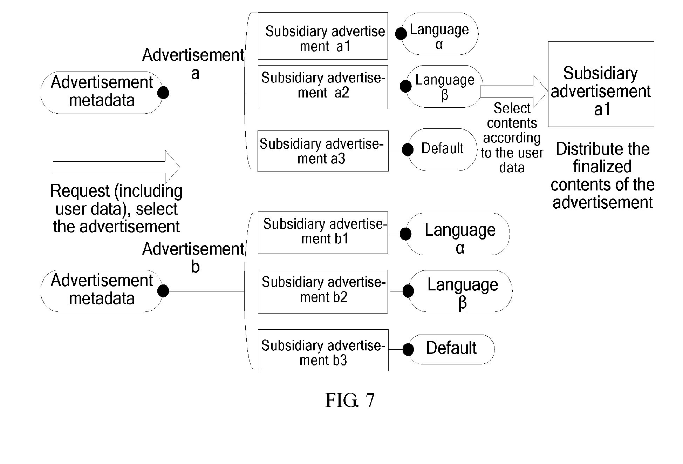

In a subsidiary advertisement description method according to an embodiment of the present invention, an advertisement includes multiple mutually independent subsidiary advertisements (as shown in FIG. 7). The multiple subsidiary advertisements correspond to the same advertisement metadata. The advertisement metadata includes personal information of a receiver and context information. The subsidiary advertisement can be set as complete contents of an advertisement. Each of the subsidiary advertisements corresponds to a distribution condition (the same as the subsidiary advertisement description method). Each advertisement includes a subsidiary advertisement that is set as a default subsidiary advertisement. If no other subsidiary advertisements are selected, the default advertisement is distributed.

The server-side personalized advertisement selection method corresponding to the subsidiary advertisement description method includes the following main steps:
1. An advertisement to be distributed is determined according to stored advertisement metadata and user data.
2. A subsidiary advertisement to be sent to a user is determined according to a distribution condition corresponding to the subsidiary advertisement of the determined advertisement and distribution context.
3. The selected subsidiary advertisement is set as the whole content of the advertisement to be distributed. The advertisement to be distributed further includes an advertisement ID, a subsidiary advertisement ID, and the distribution condition corresponding to the subsidiary advertisement.

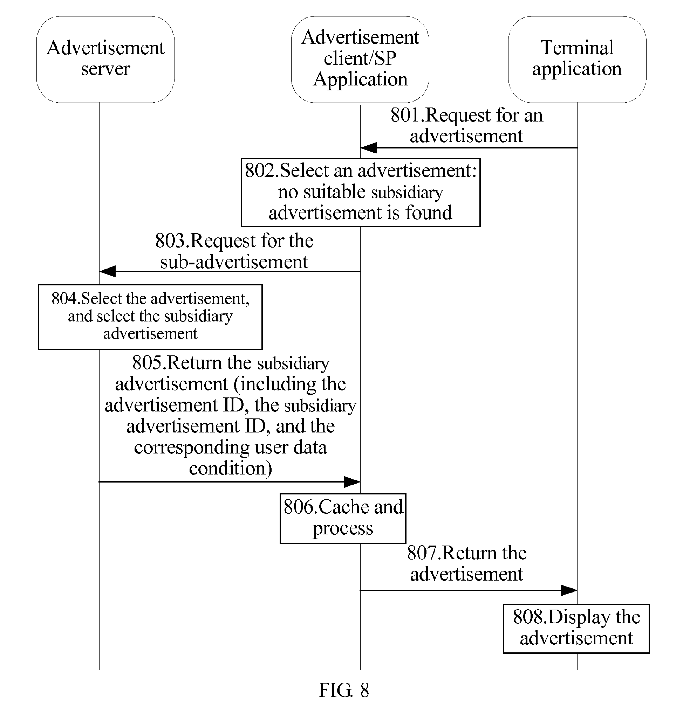

In an embodiment of the present invention, a flow chart of a terminal side personalized advertisement selection method corresponding to the subsidiary advertisement description method is shown in FIG. 8, which includes the following steps:

In step 801, an advertisement client receives an advertisement request sent by a terminal application, and selects an advertisement cached in the terminal according to the request. If the advertisement is found, the procedure proceeds to step 802; if the advertisement is not found, the procedure proceeds to step 806.

In step 802, the advertisement client determines a subsidiary advertisement of the above advertisement, which is cached in the terminal, according to the above advertisement. Specifically, a subsidiary advertisement meeting the condition may be selected by matching distribution context with a subsidiary advertisement distribution condition. If a suitable subsidiary advertisement is found, the subsidiary advertisement is set as the advertisement content to be distributed, and the procedure proceeds to the end of the steps; if a suitable subsidiary advertisement is not found, the procedure proceeds to step 803.

In step 803, the advertisement client requests an advertisement server for a subsidiary advertisement. The request includes an advertisement ID and a subsidiary advertisement request ID.

In step 804, the advertisement server selects a suitable subsidiary advertisement.

In step 805, the advertisement server sends the subsidiary advertisement together with the distribution condition corresponding to the subsidiary advertisement to the advertisement client.

In step 806, the advertisement client sets the subsidiary advertisement in step 804 as the advertisement content to be distributed.

In step 807, the advertisement server selects the advertisement and the suitable subsidiary advertisement and sends them to the advertisement client.

In step 808, the advertisement client sets the subsidiary advertisement as the advertisement content to be distributed.

In a second embodiment of the present invention, an advertisement stored in an advertisement server is as shown in Table 3.

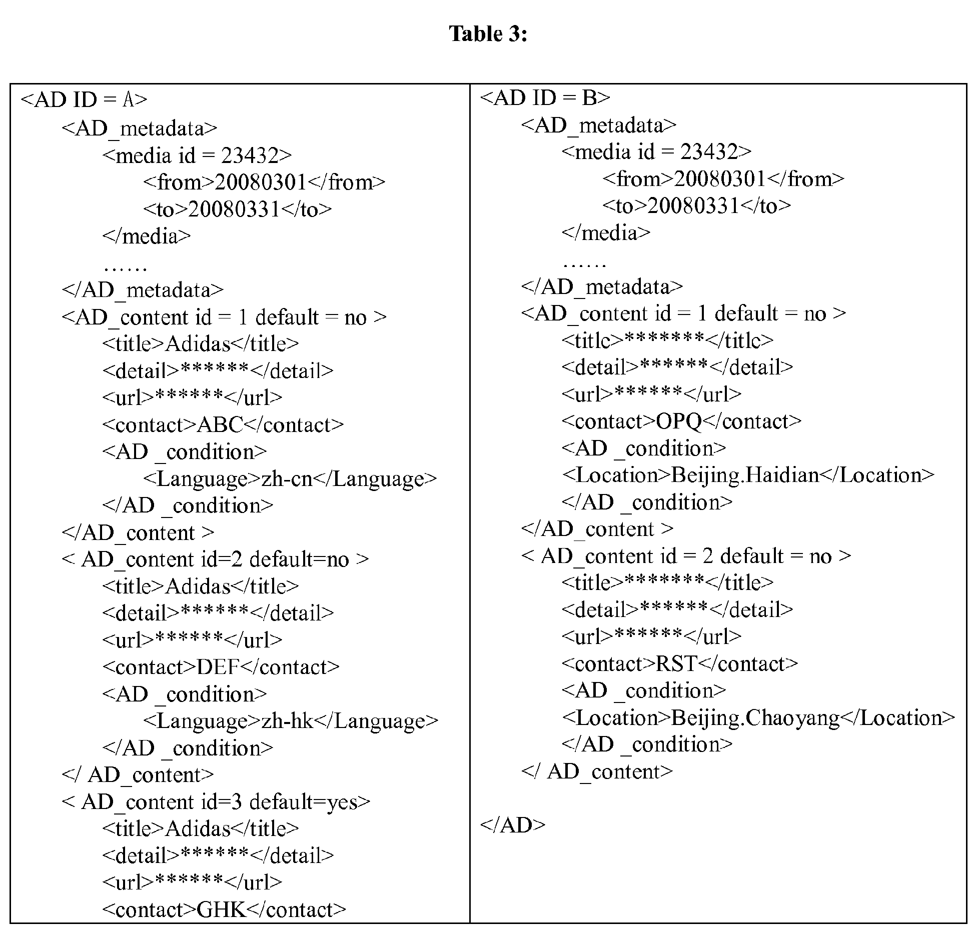

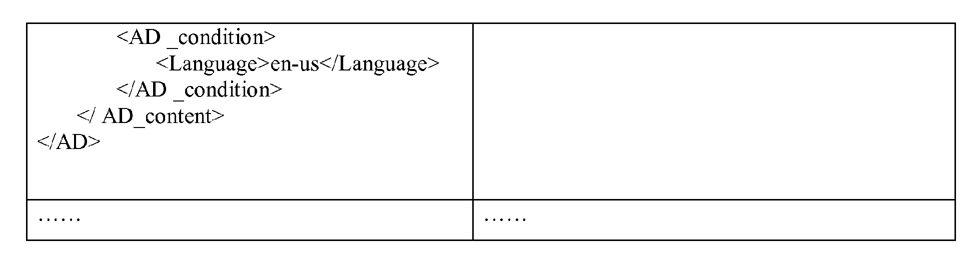

1. When a user browses a social networking site with a mobile terminal, and triggers an advertisement request. The request includes a media ID number, which equals 23432.
2. The advertisement server matches each advertisement AD_metadata in Table 1 according to parameters in the request, and selects an advertisement A as a candidate advertisement accordingly.
3. The advertisement server requests an advertisement system external resource for the language that a user terminal device uses (for details, refer to relevant OMA standards for details) according to information related to an AD_condition of an AD_content in the advertisement A, and selects contents of the AD_content whose ID number equals 2 as the subsidiary advertisement according to the language zh-hk.
4. The subsidiary advertisement AD_content of the advertisement A, whose ID number equals 1, is sent to the terminal. The detailed content is shown in FIG. 4. The advertisement ID, the subsidiary advertisement ID, and a distribution condition corresponding to the subsidiary advertisement are also included.

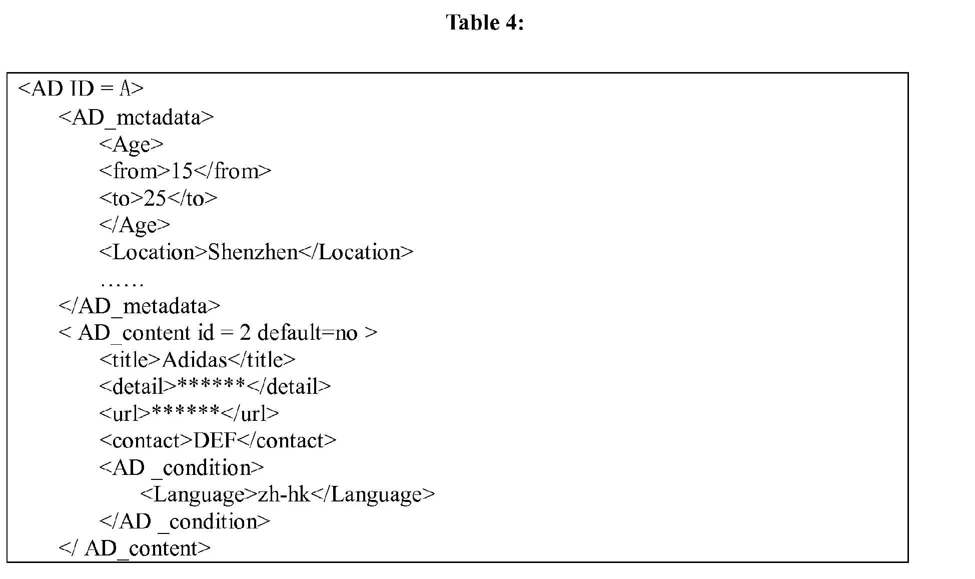

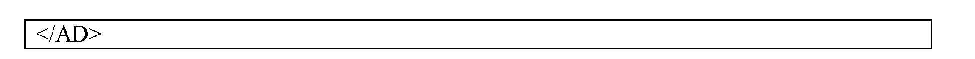

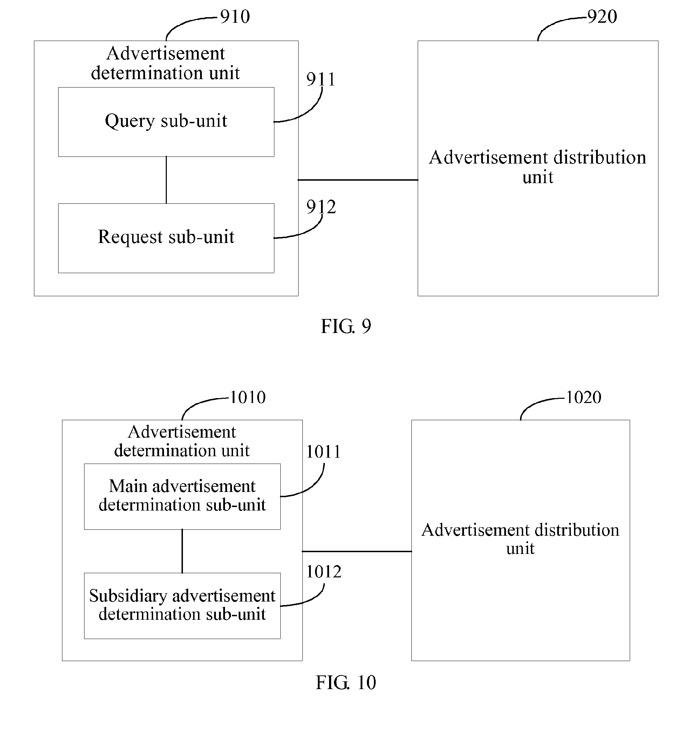

In an embodiment, the present invention provides a service entity (such as an advertisement client or an SP Application), as shown in FIG. 9, which includes an advertisement determination unit 910 and an advertisement distribution unit 920. The advertisement determination unit 910 is configured to obtain a main advertisement to be distributed and subsidiary advertisement(s) corresponding to the main advertisement according to advertisement metadata and an advertisement request, which includes the following steps: The main advertisement to be distributed is determined according to the pre-stored advertisement metadata and the received advertisement request. The subsidiary advertisement to be distributed is determined according to a pre-stored subsidiary advertisement distribution condition of the main advertisement. The determining the subsidiary advertisement to be distributed according to the pre-stored subsidiary advertisement distribution condition of the main advertisement includes the following steps: Distribution context data needed for judgment is obtained according to the subsidiary advertisement distribution condition of the main advertisement. The subsidiary advertisement meeting the distribution condition is determined as the subsidiary advertisement to be distributed according to the obtained distribution context data. The obtaining the distribution context data needed for judgment according to the subsidiary advertisement distribution condition of the main advertisement includes the following steps: A data source address of the distribution context data and a request method are determined. The data source address is requested for the corresponding context data, and a response is received. The advertisement distribution unit 920 is configured to distribute the advertisement using the main advertisement and the subsidiary advertisement as the whole content of the advertisement to be distributed.

The advertisement determination unit 910 includes: a query sub-unit 911 and a request sub-unit 912. The query sub-unit 911 is configured to query whether the local storage of the client or the SP Application stores the main advertisement and the subsidiary advertisement(s). The request sub-unit 912 is configured to use the main advertisement stored locally if the local storage of the client or the SP Application stores the main advertisement, query whether the local storage of the client or the SP Application has the subsidiary advertisement corresponding to the main advertisement, use the main advertisement and the subsidiary advertisement if the subsidiary advertisement corresponding to the main advertisement exists, request an advertisement server for the subsidiary advertisement corresponding to the main advertisement if the subsidiary advertisement does not exist; and request the advertisement server for the main advertisement meeting the condition and the subsidiary advertisement corresponding to the main advertisement if the local storage of the client or the SP Application does not store the main advertisement.

In an embodiment, the present invention provides an advertisement server, as shown in FIG. 10, which includes an advertisement determination unit 1010 and an advertisement distribution unit 1020. The advertisement determination unit 1010 is configured to obtain a main advertisement to be distributed and subsidiary advertisement(s) corresponding to the main advertisement according to advertisement metadata and an advertisement request. The advertisement distribution unit 1020 is configured to distribute the advertisement using the main advertisement and the subsidiary advertisement as the whole content of the advertisement to be distributed.

The advertisement determination unit 1010 includes a main advertisement determination sub-unit 1011 and a subsidiary advertisement determination sub-unit 1012. The main advertisement determination sub-unit 1011 is configured to determine the main advertisement to be distributed according to the pre-stored advertisement metadata and the obtained advertisement request. The subsidiary advertisement determination sub-unit 1012 is configured to obtain a distribution condition corresponding to a subsidiary advertisement of the main advertisement and distribution context, and determine the subsidiary advertisement to be distributed according to the distribution condition corresponding to the subsidiary advertisement and the distribution context.

In an embodiment, the present invention provides an advertisement distribution system, which includes an advertisement client or an advertisement server.

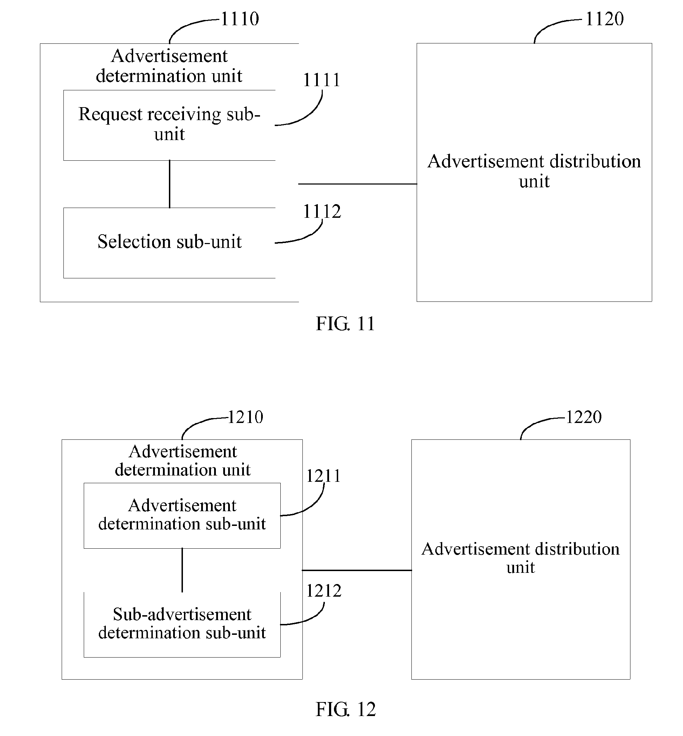

In an embodiment, the present invention provides a service entity (such as an advertisement client or an SP Application), as shown in FIG. 11, which includes an advertisement determination unit 1110 and an advertisement distribution unit 1120. The advertisement determination unit 1110 is configured to obtain a main advertisement to be distributed and subsidiary advertisement(s) corresponding to the main advertisement according to advertisement metadata and an advertisement request, which includes the following steps: The advertisement to be distributed is determined according to the pre-stored advertisement metadata and user data. The subsidiary advertisement to be sent to a user is determined according to a distribution condition corresponding to the subsidiary advertisement(s) of the determined advertisement and distribution context. The advertisement distribution unit 1120 is configured to distribute the advertisement using the subsidiary advertisement(s) as the whole content of the advertisement to be distributed.

The advertisement determination unit 1110 includes a request receiving sub-unit 1111 and a selection sub-unit 1112. The receiving sub-unit 1111 is configured to receive an advertisement request. The selection sub-unit 1112 is configured to select an advertisement in a cache according to the request, determine a corresponding subsidiary advertisement(s) according to the advertisement if the cached advertisement is found, obtain the subsidiary advertisement(s) from an advertisement server if the corresponding subsidiary advertisement is not found; and obtain the advertisement and the corresponding subsidiary advertisement from the advertisement server if the cached advertisement dose not exist.

In an embodiment, the present invention provides an advertisement server, as shown in FIG. 12, which includes an advertisement determination unit 1210 and an advertisement distribution unit 1220. The advertisement determination unit 1210 is configured to obtain a main advertisement to be distributed and subsidiary advertisement(s) corresponding to the main advertisement according to advertisement metadata and an advertisement request. The advertisement distribution unit 1220 is configured to distribute the advertisement using the subsidiary advertisement(s) as the whole content of the advertisement to be distributed.

The advertisement determination unit 1210 includes an advertisement determination sub-unit 1211 and a subsidiary advertisement determination sub-unit 1212. The advertisement determination sub-unit 1211 is configured to determine the advertisement to be distributed according to the pre-stored advertisement metadata and user data. The subsidiary advertisement determination sub-unit 1212 is configured to determine the subsidiary advertisement(s) to be sent to a user according to a distribution condition corresponding to the subsidiary advertisement(s) of the determined advertisement and distribution context.

In an embodiment, the present invention provides an advertisement distribution system, which includes an advertisement client and/or an SP Application and an advertisement server.

In view of the above embodiments of the present invention, personalized advertisement contents are provided for the user, so that user experience and advertisement effect are improved. The terminal requests only the server for the subsidiary advertisement according to the cached main advertisement, so that the utilization ratio of the cached advertisement is increased, and network traffic is reduced.

Through the above description of the implementation, it is clear to persons skilled in the art that the present invention may be accomplished through hardware, or through software plus a necessary universal hardware platform. But in many cases, the software implementation is preferred. Based on this, the above technical solutions or the part that makes contributions to the prior art can be substantially embodied in the form of a software product. The computer software product may be stored in a storage medium, and contain several instructions to instruct a terminal equipment (for example, a mobile phone, a personal computer, a server, or network equipment) to perform the method described in the embodiments of the present invention.

Preferred embodiments of the present invention are described. It should be noted that modifications and variations may be made without departing from the principle of the present invention.

## Claims

1. A processing method for advertisement distribution, comprising:
obtaining a main advertisement to be distributed and subsidiary advertisement(s) corresponding to the main advertisement according to advertisement metadata and a received advertisement request; and responding to the advertisement request by using the main advertisement and subsidiary advertisement(s) as the whole content of an advertisement to be distributed.

2. The processing method of claim 1, wherein the obtaining the main advertisement to be distributed and the subsidiary advertisement(s) corresponding to the main advertisement according to the advertisement metadata and the received advertisement request comprises:
determining the main advertisement to be distributed according to the pre-stored advertisement metadata and the received advertisement request; and
determining the subsidiary advertisement(s) to be distributed according to a pre-stored subsidiary advertisement distribution condition of the main advertisement.

3. The processing method of claim 2, wherein the determining the subsidiary advertisement(s) to be distributed according to the pre-stored subsidiary advertisement distribution condition of the main advertisement comprises:
obtaining distribution context data needed for judgment according to the subsidiary advertisement distribution condition of the main advertisement; and
determining the subsidiary advertisement(s) meeting the distribution condition as the subsidiary advertisement(s) to be distributed according to the obtained distribution context data.

4. The processing method of claim 3, wherein the obtaining of the distribution context data needed for judgment according to the subsidiary advertisement distribution condition of the main advertisement comprises:
determining a data source address of the distribution context data and a request method;
requesting the data source address for the context data, and receiving a response.

5. The processing method of claim 1, wherein when an entity responding to the advertisement request is an advertisement client or a Service Provider (SP) Application, the obtaining of the main advertisement to be distributed and the subsidiary advertisement(s) corresponding to the main advertisement according to the advertisement metadata and the advertisement request comprises:
judging, by the advertisement client or the SP Application, whether the local storage of the client or the SP Application stores contents of the main advertisement meeting the distribution condition according to the advertisement metadata and the received advertisement request,
determining an advertisement as the main advertisement to be distributed if the local storage of the client or the SP Application has the main advertisement meeting the condition, judging whether the local storage of the client or the SP Application has subsidiary advertisement(s) of the main advertisement meeting the distribution condition according to the subsidiary advertisement distribution condition of the main advertisement, determining the subsidiary advertisement(s) as the subsidiary advertisement(s) to be distributed if the subsidiary advertisement(s) meeting the distribution condition exists, and obtaining subsidiary advertisement(s) of the main advertisement meeting the distribution condition from an advertisement server if the subsidiary advertisement(s) meeting the distribution condition do not exist;
requesting the advertisement server for the main advertisement meeting the condition and subsidiary advertisement(s) corresponding to the main advertisement if the local storage of the client or the SP Application does not have a main advertisement meeting the condition.

6. The processing method of claim 5, further comprising:
caching the obtained main advertisement and/or the subsidiary advertisement data.

7. The processing method of claim 5, wherein the judging of whether the local storage of the client or the SP Application has the subsidiary advertisement(s) of the main advertisement meeting the distribution condition according to the subsidiary advertisement distribution condition of the main advertisement comprises:
obtaining, by the advertisement client or the SP Application, the distribution context data needed for judgment according to the subsidiary advertisement distribution condition of the main advertisement; and
determining, by the advertisement client or the SP Application, the subsidiary advertisement(s) meeting the distribution condition as the subsidiary advertisement to be distributed according to the obtained distribution context data.

8. The processing method of claim 7, wherein the obtaining, by the advertisement client or the SP Application, the distribution context data needed for judgment according to the subsidiary advertisement distribution condition of the main advertisement comprises:
determining, by the advertisement client or the SP Application, the data source address of the distribution context data and the request method; and
requesting, by the advertisement client or the SP Application, the data source address for the corresponding context data, and receiving the response.

9. The processing method of claim 5, wherein the requesting, by the advertisement client or the SP Application, the advertisement server for the main advertisement meeting the distribution condition and the subsidiary advertisement(s) corresponding to the main advertisement comprises:
sending, by the advertisement client, a main-advertisement request to the advertisement server.

10. The processing method of claim 5, wherein the requesting, by the advertisement client or the SP Application, the advertisement server for the subsidiary advertisement(s) of the main advertisement meeting the distribution condition comprises:
sending, by the advertisement client, a subsidiary-advertisement request to the server, wherein the subsidiary-advertisement request carries an identifier (ID) of the requested main advertisement and an ID of the subsidiary advertisement, or the subsidiary-advertisement request carries the ID of the requested main advertisement.

11. The processing method of claim 10, wherein the subsidiary-advertisement request further carries an ID of an already stored subsidiary advertisement, indicating whether the advertisement client stores a default subsidiary advertisement;
when the server selects the default advertisement as the subsidiary advertisement to be distributed, and the advertisement client stores the default subsidiary advertisement, the subsidiary advertisement returned to the advertisement client is the ID of the default advertisement, and does not include contents of the subsidiary advertisement.

12. The processing method of claim 3, wherein the distribution context data needed for judgment comprises one or more pieces of the following information: a user profile, location information of the user, presence information, and user terminal capability.

13. The processing method of claim 1, wherein the responding to the advertisement request by using the main advertisement and subsidiary advertisement(s) as the whole content of an advertisement to be distributed comprises:
merging the main advertisement and the subsidiary advertisement, and setting the merged advertisement contents as the response to the advertisement request; or
dividing obviously a response message to the advertisement request into main advertisement contents and subsidiary advertisement contents.

14. A processing method for advertisement distribution, comprising:
obtaining an advertisement to be distributed and subsidiary advertisement(s) corresponding to the advertisement according to advertisement metadata and an advertisement request;
distributing the advertisement using the subsidiary advertisement(s) as the whole content of the advertisement to be distributed.

15. The processing method of claim 14, wherein the obtaining of the advertisement to be distributed and the subsidiary advertisement(s) corresponding to the advertisement according to the advertisement metadata and the advertisement request comprises:
determining the advertisement to be distributed according to pre-stored advertisement metadata and user data; and
determining the subsidiary advertisement(s) to be sent to a user according to a distribution condition corresponding to the subsidiary advertisement(s) of the determined advertisement and distribution context.

16. The processing method of claim 15, wherein determining of the subsidiary advertisement to be distributed according to a pre-stored subsidiary advertisement distribution condition of the advertisement comprises:
obtaining distribution context data needed for judgment according to the subsidiary advertisement distribution condition of the advertisement; and
determining the subsidiary advertisement(s) meeting the distribution condition as the advertisement to be distributed according to the obtained distribution context data.

17. The processing method of claim 16, wherein the obtaining the distribution context data needed for judgment according to the subsidiary advertisement distribution condition of the advertisement comprises:
determining a data source address of the distribution context data and a request method; and
requesting the data source address for the corresponding context data, and receiving a response.

18. The processing method of claim 14, wherein when an entity responding to the advertisement request is an advertisement client or a Service Provider (SP) Application, the obtaining of the advertisement to be distributed and the subsidiary advertisement(s) corresponding to the advertisement according to the advertisement metadata and the advertisement request comprises:
receiving, by the advertisement client or the SP Application, the advertisement request, selecting the advertisement in a cache according to the request, determining the corresponding subsidiary advertisement(s) according to the advertisement if the suitable cached advertisement matches, and obtaining the subsidiary advertisement(s) from an advertisement server if no corresponding subsidiary advertisement is found;
obtaining the advertisement and the corresponding subsidiary advertisement(s) from the advertisement server if no suitable cached advertisement matches.

19. The processing method of claim 18, wherein the obtaining of the subsidiary advertisement(s) from the advertisement server comprises:
sending, by the advertisement client or the SP Application, a subsidiary advertisement request to the advertisement server, wherein the subsidiary advertisement request carries an identifier (ID) of the advertisement and ID(s) of the subsidiary advertisement request; and
selecting, by the advertisement server, the suitable subsidiary advertisement(s), and sending the subsidiary advertisement(s) together with the distribution condition corresponding to the subsidiary advertisement(s) to the advertisement client or the SP Application.

20. The processing method of claim 18, wherein the obtaining of the advertisement and the corresponding subsidiary advertisement(s) from the advertisement server comprises:
sending, by the advertisement client or the SP Application, the advertisement request to the advertisement server; and
selecting, by the advertisement server, the advertisement and suitable subsidiary advertisement(s), and sending the advertisement and the suitable subsidiary advertisement(s) to the advertisement client or the SP Application.

21. The processing method of claim 20, wherein the determining of the corresponding subsidiary advertisement(s) according to the advertisement comprises:
matching the subsidiary advertisement distribution condition according to the distribution context, and selecting the subsidiary advertisement(s) meeting the condition.

22. A service entity, comprising:
an advertisement determination unit, configured to obtain a main advertisement to be distributed and subsidiary advertisement(s) corresponding to the main advertisement according to advertisement metadata and an advertisement request; and
an advertisement distribution unit, configured to distribute the advertisement using the main advertisement and the subsidiary advertisement(s) as the whole content of the advertisement to be distributed.

23. The service entity of claim 22, wherein the advertisement determination unit comprises:
a query sub-unit, configured to query whether the main advertisement and the subsidiary advertisement(s) matching the request stored locally exist;
a request sub-unit, configured to send a main-advertisement request or a subsidiary-advertisement request to an advertisement server according to a result from the processing of the query sub-unit; and
a selection sub-unit, configured to select a main advertisement and subsidiary advertisement(s) stored locally, determine the advertisement as the main advertisement to be distributed if the local storage of the client or the SP Application has the main advertisement meeting the condition, judge whether the local storage of the client or the SP Application has subsidiary advertisement(s) of the main advertisement meeting a distribution condition according to the subsidiary advertisement distribution condition of the main advertisement, determine the subsidiary advertisement(s) as the subsidiary advertisement(s) to be distributed if the subsidiary advertisement(s) meeting the distribution condition exists, let the request sub-unit obtain the subsidiary advertisement(s) of the main advertisement meeting the distribution condition from the advertisement server if no subsidiary advertisement(s) meeting the distribution condition exist, and let the request sub-unit request the advertisement server for the main advertisement meeting the condition and the subsidiary advertisement(s) corresponding to the main advertisement if the local storage of the client or the SP Application does not have the main advertisement meeting the condition.

24. The service entity of claim 22 or 23, comprising an advertisement client or a Service Provider (SP) Application.

25. An advertisement server, comprising:
an advertisement determination unit, configured to obtain a main advertisement to be distributed and subsidiary advertisement(s) corresponding to the main advertisement according to advertisement metadata and an advertisement request; and
an advertisement distribution unit, configured to distribute the advertisement using the main advertisement and the subsidiary advertisement(s) as the whole content of the advertisement to be distributed.

26. The advertisement server of claim 25, wherein the advertisement determination unit comprises:
a main advertisement determination sub-unit, configured to determine the main advertisement to be distributed according to the pre-stored advertisement metadata and the obtained advertisement request; and
a subsidiary advertisement determination sub-unit, configured to obtain a distribution condition corresponding to the subsidiary advertisement(s) of the main advertisement and distribution context, and determine the subsidiary advertisement(s) to be distributed according to the distribution condition corresponding to the subsidiary advertisement(s) and the distribution context.

27. An advertisement distribution system, comprising the service entity as claim 22 or the advertisement server as claim 25.

28. A service entity, comprising:
an advertisement determination unit, configured to obtain a main advertisement to be distributed and subsidiary advertisement(s) corresponding to the main advertisement according to advertisement metadata and an advertisement request; and
an advertisement distribution unit, configured to distribute the advertisement using the subsidiary advertisement(s) as the whole content of the advertisement to be distributed.

29. The service entity of claim 28, wherein the advertisement determination unit comprises:
a selection sub-unit, configured to query the advertisement and the subsidiary advertisement(s) stored locally, and select the advertisement and the subsidiary advertisement(s) matching the request.
an advertisement request sub-unit, configured to send the advertisement request or a subsidiary advertisement request to an advertisement server according to a selection result of the selection sub-unit; determine the corresponding subsidiary advertisement(s) according to the advertisement if the selection sub-unit finds the suitable cached advertisement that matches; request the advertisement server for the subsidiary advertisement(s) if no corresponding subsidiary advertisement is found; and request the advertisement server for the advertisement and the corresponding subsidiary advertisement(s) if no suitable cached advertisement matches.

30. The service entity of claim 28 or 29, comprising an advertisement client or a Service Provider (SP) Application.

31. An advertisement server, comprising:
an advertisement determination unit, configured to obtain a main advertisement to be distributed and subsidiary advertisement(s) corresponding to the main advertisement according to advertisement metadata and an advertisement request; and
an advertisement distribution unit, configured to distribute the advertisement using the subsidiary advertisement(s) as the whole content of the advertisement to be distributed.

32. The advertisement server of claim 31, wherein the advertisement determination unit comprises:
an advertisement determination sub-unit, configured to determine the advertisement to be distributed according to the pre-stored advertisement metadata and distribution context; and
a subsidiary advertisement determination sub-unit, configured to determine the subsidiary advertisement(s) to be sent to a user according to a distribution condition corresponding to the subsidiary advertisement(s) of the determined advertisement and the distribution context.

33. An advertisement distribution system, comprising the service entity as claim 28 or the advertisement server as claim 31.
